Europäisches Patentamt

European Patent Office

Office européen des brevets

(11) Veröffentlichungsnummer: **0 070 999**
A2

## (12) EUROPÄISCHE PATENTANMELDUNG

(21) Anmeldenummer: 82104789.1

(22) Anmeldetag: 01.06.82

(51) Int. Cl.³: **B 60 K 15/02**
**B 65 D 88/00**

(30) Priorität: 12.06.81 DE 3123303

(43) Veröffentlichungstag der Anmeldung:
09.02.83 Patentblatt 83/6

(84) Benannte Vertragsstaaten:
AT BE CH DE FR GB IT LI NL SE

(71) Anmelder: BASF Aktiengesellschaft
Carl-Bosch-Strasse 38
D-6700 Ludwigshafen(DE)

(72) Erfinder: Buehrle, Hans
An der Froschlache 23
D-6700 Ludwigshafen(DE)

(72) Erfinder: Lindner, Edmund
Edenkobener Strasse 9
D-6700 Ludwigshafen(DE)

(72) Erfinder: Lohrbaecher, Volker
Kisslichstrasse 1
D-6940 Weinheim(DE)

(72) Erfinder: Schneiders, Arno
Berner Weg 34
D-6700 Ludwigshafen(DE)

(54) Behälter aus Kunststoff.

(57) Bei einem Kraftstoffbehälter für mit Verbrennungsmotor angetriebene Fahrzeuge sind der Tankkörper sowie die Anbauteile nach dem Blasformverfahren hergestellt. Der Kraftstoffbehälter besteht vornehmlich aus Polymerisaten des Ethylens mit einer Dichte von 0,94 bis 0,96 g/cm³ und einem Schmelzindex MFI 190/21,6 nach DIN 53 735 von 1,6 bis 12 g/10 min.
Derartige Kraftstoffbehälter führen dann zu Eigenschaften im Sinne des ECE-Reglements 34, Annex 5 vom 25. Juli 1975 mit Amendment von 1978, wenn das Gewicht des Tankkörpers $G_T$ bezogen auf seine Oberfläche $O_T$ und sein Volumen $V_T$ der Beziehung $G_T = 1,06 \cdot O_T \cdot V_T^{1/3} \pm 10\,\%$ entspricht.

## Behälter aus Kunststoff

Die Erfindung bezieht sich auf einen Behälter aus Kunststoff, insbesondere einen Kraftstoffbehälter aus Polymerisaten des Ethylens mit einer Dichte von 0,94 bis 0,96 g/cm$^3$ und einem Schmelzindex MFI 190/21,6 nach DIN 53 735 von 1,5 bis 12 g/10 min, der im Blasformverfahren hergestellt ist und aus einem Tankkörper sowie einem oder mehreren Anbauteilen besteht.

An Kunststoffbehälter werden eine Reihe von Anforderungen gestellt, die die Auswahl der dafür geeigneten Werkstoffe einschränken, Variationen der Behältergestalt nur in gewissen Grenzen zulassen und bestimmte Wanddicken der Behälter fordern. Geeignete Werkstoffe für solche Behälter, die alle die Eigenschaften, die zur Erfüllung der im Kraftfahrzeug vorkommenden Anforderungen besitzt, sind thermoplastische Kunststoffe, insbesondere Polymerisate des Ethylens. Es ist bereits bekannt, Kraftstoffbehälter für Fahrzeuge aus diesem Kunststoff herzustellen, wobei ein thermoplastischer Schlauchabschnitt aus dem Kunststoff in eine Blasform eingebracht und durch Einblasen von Luft zu dem Kraftstoffbehälter geformt wird. Dabei werden die Anbauteile, z.B. Füllrohr, Anschluß für Kraftstoffentnahmeleitung, Ablaßeinrichtung, Befestigungsflansch für das Füllstandsanzeigegerät und Entlüftungsanschlüsse entweder nachträglich durch Reibungs- oder Spiegelschweißen angebracht oder bereits beim Blasformen ausgebildet.

Derartige Behälter sind jedoch nur mit erheblichem Aufwand zu projektieren bzw. so zu optimieren, daß ihre mittlere Wanddicke und ihr Gewicht zu Eigenschaften im Sinne des ECE (Economic Commission for Europe)-Reglement 34, Annex 5 vom 25. Juli 1975 mit Amendment von 1978 führen. So wird aus Gründen des Umweltschutzes und zur Vermeidung von Ge-

Wr/P

ruchsbelästigungen der Fahrzeuginsassen gefordert, daß die in der Zeiteinheit durch die Behälterwand hindurchdiffundierende Kraftstoffmenge einen bestimmten Wert nicht übersteigt. Außerdem müssen die Behälter ausreichende Knautschfestigkeit und Durchstoßfestigkeit aufweisen. Diese Forderungen müssen auch bei sehr niedrigen Umgebungstemperaturen erfüllt sein, bei denen die Flexibilität der Werkstoffe und ihre Fähigkeit, Verformungsarbeit aufzunehmen, stark vermindert sind.

Bei Brandeinwirkung wird darüber hinaus eine gewisse Einwirkungsdauer des Feuers auf den Behälter gefordert, bevor er undicht wird und/oder sein Inhalt in Brand gerät. Während der Brandeinwirkung darf sich im mit Kraftstoff gefüllten Behälter kein Druck aufbauen, der so hoch ist, daß er eine Explosion des Behälters herbeiführt.

Die Frage, in welchem Umfang Stoßbelastungen, Verformungen und Brandeinflüsse auf den Behälter wirken, wird mitbestimmt durch den Platz, an dem der Behälter im Fahrzeug untergebracht ist und in welchem Maße benachbarte und auch scharfkantige Bauteile gegen ihn drücken können. In dem Bestreben, das Fahrzeug raumsparend zu bauen und ihm trotzdem einen genügend großen Kraftstoffvorrat mitzugeben, soll der Kraftstoffbehälter auch kleine Lücken in seinem Einbauraum ausnützen, was mitunter zu einer recht zergliederten und/oder flachen, für die Aufnahme großer Volumina ungünstigen Gestalt des Behälters führt.

Schließlich soll der Behälter mit geringst möglichen Kosten herzustellen sein.

Alle diese Forderungen haben eine direkte Auswirkung auf die Wandicke des Behälters und sein Gewicht und verlangen teilweise einander widersprechende Maßnahmen.

0070999

Eine durch weitgehendes Ausnützen kleiner Lücken im Einbauraum verursachte Zergliederung und Abflachung des Behälters kann enge Abrundungsradien und Falten bringen, an denen er bei Stoß und innerem Überdruck bevorzugt reißt. Das ungünstige Verhältnis Fassungsvolumen zu Behälteroberfläche führt zu einer verstärkten Kraftstoffdifussion und verlangt zum Ausgleich größere Wanddicken.

Niedrige Herstellkosten verlangen wiederum geringe Wanddicken, und zwar zunächst wegen der Materialkosten. Auch die Fertigungszeit und damit die Fertigungskosten hängen in hohem Maße von der Wanddicke des Formteils ab, weil die Zeitdauer, während der das Teil unter Formzwang erstarren muß, eine Funktion der Wanddicke ist.

Diese Besonderheiten bei der Entwicklung eines Kraftstoffbehälters aus thermoplastischem Kunststoff führen somit zu großen Unsicherheiten bezüglich der notwendigen Behälterwanddicke, des erforderlichen Behältergewichts sowie der zu erwartenden Herstellkosten. Die Klärung dieser Fragen ist bei jeder Neuentwicklung mit erheblichem Aufwand an Versuchs- und Prüfkosten sowie mit entsprechend langer Entwicklungsdauer verbunden.

Es war daher Aufgabe der Erfindung, den bei der Optimierung von Kraftstoffbehältern aus thermoplastischem Kunststoff sich ergebenden Aufwand zu reduzieren und gleichzeitig eine verläßliche Aussage über die notwendige mittlere Wanddicke solcher Behälter zu gewinnen.

Diese Aufgabe wird durch die im Kennzeichen des Anspruchs 1 enthaltene Maßnahme gelöst.

Für den erfindungsgemäßen Kraftstoffbehälter eignen sich die für die Herstellung blasgeformter Hohlkörper üblicherweise verwendeten thermoplastischen Kunststoffe, vornemlich Polymerisate des Ethylens mit einer Dichte von 0,94 bis 0,96 $g/cm^3$, vorteilhaft mit einer Dichte von 0,942 bis 0,946 $g/cm^3$ und einem Schmelzindex MFI 190/21,6 nach DIN 53 735 von 1,6 bis 12 g/10 min, zweckmäßig von 5,4 bis 6,8 g/10 min. Die Kunststoffe werden in an sich bekannter Weise als Schlauchabschnitt in eine Blasform eingebracht und mit Hilfe eines Druckmittels blasgeformt.

Für die Auslegung der aus einem Tankkörper sowie einem oder mehreren Anbauteilen bestehenden Behälter hat es sich gezeigt, daß zwischen Behältervolumen und Behältergewicht ein Zusammenhang besteht, der zwar auch von der Gestalt des Behälters abhängig ist, aber durch die Berücksichtigung der Größe der Behälteroberfläche eng eingegrenzt werden kann. Erfindungsgemäß entspricht das Gewicht des Tankkörpers $G_T$, bezogen auf seine Oberfläche $O_T$ und sein Volumen $V_T$ der Beziehung $G_t = 1,06 \cdot O_T \cdot V_T^{1/3} \pm 10 \%$,

vorzugsweise der Beziehung $G_T = 1,06 \cdot O_T \cdot V_T^{1/3} \pm 5 \%$.

Dabei bedeuten

$G_T$   das Gewicht der Kraftstoff aufnehmenden Wandungen des Tankkörpers in kg,

$O_T$   die Kunststoff-benetzte Oberfläche des Tankkörpers in $m^2$ und

$V_t$   das Volumen des Behälters in $dm^3$.

Nach einem weiteren Merkmal der Erfindung umfaßt das nach vorstehender Gleichung feststellbare Gewicht $G_T$ auch die mit dem Tankkörper unlösbar verbundenen Anbauteile, beispielsweise das Füllrohr.

0070999

Beispiel

Bei einem Kraftstoffbehälter mit 75 Liter Fassungsvolumen und einer Kraftstoff-benetzten Oberfläche von 1,33 $m^2$ ergibt sich ein Gewicht des Tankkörpers von 5,94 $\pm$ 0,594 kg, vorzugsweise von 5,94 $\pm$ 0,294 kg, d.h. das Tankkörpergewicht ist innerhalb eines Bereiches zwischen 6,53 und 5,34 kg, vorzugsweise zwischen 6,24 und 5,64 kg anzunehmen. Es hat sich gezeigt, daß dieser aus hochmolekularem Polyethylen hoher Dichte bestehende Kraftstoffbehälter den Bedingungen des ECE-Reglements 34 Annex 5 vom 5. Juli 1975 mit Amendment von 1978 entspricht.

Patentansprüche

1. Behälter aus Kunststoff, insbesondere Kraftstoffbehälter aus Polymerisaten des Ethylens mit einer Dichte von 0,94 bis 0,96 g/cm$^3$ und einem Schmelzindex MFI 190/21,6 nach DIN 53 735 von 1,6 bis 12 g/10 min, der im Blasformverfahren hergestellt ist und aus einem Tankkörper sowie einem oder mehreren Anbauteilen besteht, dadurch kennzeichnet, daß das Gewicht des Tankkörpers $G_T$ (in kg) bezogen auf seine Oberfläche $O_T$ (in m$^2$) und sein Volumen $V_t$ (in dm$^3$) der Beziehung $G_T = 1,06 \cdot O_T \cdot V_T^{1/3} \pm 10 \%$ entspricht.

2. Behälter nach Anspruch 1, dadurch gekennzeichnet, daß das Gewicht $G_T$ den Tankkörper und die unlösbar mit ihm verbundenen Anbauteile umfaßt.